# DEMANDE DE BREVET EUROPEEN

(11) **EP 2 338 736 A1**
(43) Date de publication de la demande: **29.06.2011**
(21) Numéro de dépôt: 10306413.5
(22) Date de dépôt: 15.12.2010
(51) Int. Cl.: B60R 5/04

(54) **Véhicule automobile comportant un coffre équipé d'un faux plancher amovible et d'un élément formant cache bagage apte à servir d'appui au faux plancher en position break-procédé associé**

(30) Priorité: 22.12.2009 FR 0959403
(71) Demandeur: Renault s.a.s., 92100 Boulogne-Billancourt (FR)
(72) Inventeur: Couturier, Karl, 78650, BEYNES (FR); Martz, Philippe, 78650, BEYNES (FR)

(57) **Abrégé**

L'invention concerne un véhicule automobile qui comporte un coffre délimité par un plancher (12), deux parois latérales (11) et une paroi arrière (15), ladite paroi arrière (15) comportant une ouverture d'accès (13) dont le bord inférieur (19) est à un niveau plus élevé que ledit plancher (12), ledit véhicule comportant en outre, un faux plancher (3), qui est apte à être monté dans une position haute dans laquelle ledit faux plancher (3) prolonge ledit bord inférieur (19), ledit véhicule comportant également un élément formant cache bagage (5) qui est amovible et apte à être monté entre lesdites parois latérales (11), à distance dudit faux plancher (3) dans une configuration d'occultation. Selon l'invention, ledit élément formant cache bagage (5) est apte à être agencé dans une configuration de rangement propre à servir de soutien audit faux plancher (3) dans ladite position haute.

## Description

La présente invention se rapporte à un véhicule automobile qui comporte un coffre équipé d'un faux plancher relevable en position break et d'un élément formant cache bagage servant de soutien au faux plancher en position break.

Le coffre d'un véhicule automobile est classiquement délimité par un plancher, deux parois latérales et une paroi arrière. Une ouverture d'accès, fermée par un hayon, est ménagée dans la paroi arrière, de manière à accéder à l'intérieur du coffre pour y déposer les bagages ou autres objets. L'ouverture d'accès présente un bord inférieur qui est situé à un niveau plus élevé que le plancher ce qui rend parfois l'insertion des objets dans le coffre difficile. Le coffre de certains véhicules comporte, en outre, un faux plancher amovible qui peut être disposé dans une position basse, contre le plancher, en dessous du bord inférieur de l'ouverture et qui permet de maximiser le volume du coffre. Le faux plancher peut aussi être disposé dans une position haute, ou position break, dans laquelle il prolonge le bord inférieur de l'ouverture d'accès. Il est ainsi possible de faire glisser un objet sur le faux plancher à partir de l'ouverture d'accès du coffre ; l'objet reste toujours en appui soit sur le bord inférieur de l'ouverture d'accès, soit sur le faux plancher qui prolonge ce bord, sans changement de niveau, ce qui facilite l'insertion d'objets encombrants dans le coffre.

Certains véhicules du type précité comportent également un élément formant cache bagage qui est apte à être monté entre les parois latérales, à distance du faux plancher et du plancher, de manière à occulter les objets disposés dans le coffre. Cet élément formant cache bagage réduit néanmoins le volume du coffre et doit donc pouvoir être rangé lorsque le coffre est utilisé au maximum de sa capacité, en particulier, lorsque le faux plancher est dans la position haute car cette position réduit déjà le volume du coffre.

Le document FR 2909 614 décrit un véhicule automobile qui comporte un coffre équipé d'un faux plancher tel que précité. Le faux plancher comporte plusieurs plaques articulées qui sont maintenues en position haute par une béquille rétractable. Le coffre peut comporter un logement de rangement d'un tendelet cache bagage, sous le faux plancher, quand ce dernier est en position haute ou position break.

La structure de ce faux plancher est complexe et fragile, du fait notamment de la béquille rétractable.

Aussi, un problème qui se pose et que vise à résoudre la présente invention, est de proposer un véhicule automobile qui comporte un coffre, un faux plancher monté mobile entre une position basse et une position haute et un élément cache-bagage, tel que précité, qui soit robuste et simple à fabriquer.

Dans le but de résoudre ce problème, la présente invention propose un véhicule automobile qui comporte un coffre délimité par un plancher horizontal, deux parois latérales et une paroi arrière qui sont sensiblement verticales, ladite paroi arrière comportant une ouverture d'accès dont le bord inférieur est à un niveau plus élevé que ledit plancher, ledit véhicule comportant en outre, un faux plancher amovible, qui est apte à être monté dans une position basse dans laquelle ledit faux plancher est contre ledit plancher et une position haute dans laquelle ledit faux plancher est parallèle au plancher, sensiblement en prolongement dudit bord inférieur, ledit véhicule comportant également un élément formant cache bagage qui est amovible et apte à être monté entre lesdites parois latérales, à distance dudit faux plancher dans une configuration d'occultation dans laquelle il masque ledit faux plancher. Selon l'invention, l'élément formant cache bagage est apte à être agencé dans une configuration de rangement propre à servir de soutien audit faux plancher dans ladite position haute, lorsque ledit élément formant cache bagage est disposé dans ladite configuration de rangement entre ledit plancher et ledit faux plancher.

Ainsi selon l'invention, la structure du plancher est simplifiée car elle ne comporte plus de béquille. Il n'y a pas d'ajout d'élément supplémentaire car c'est le cache bagage lui-même qui permet de soutenir le faux plancher en position break

L'élément formant cache bagage n'est pas limité selon l'invention. Il peut s'agir d'un tendelet qui, par exemple, roulé pourrait former une surface d'appui.

Selon un mode de réalisation, l'élément formant cache bagage comporte une pluralité de lattes rigides aptes à être repliées les unes sur les autres pour obtenir ladite configuration de rangement.

L'élément formant cache bagage peut comporter des moyens de montage apte à coopérer avec lesdites parois latérales pour le montage dudit élément formant cache bagage dans ladite position d'occultation.

Avantageusement, lesdits moyens de montage sont disposés de manière à pouvoir monter ledit élément formant cache bagage entre lesdites parois latérales dans une position intermédiaire dans laquelle il occulte partiellement ledit faux plancher. Cette position peut permettre le transport d'objets encombrants tout en occultant le reste de l'intérieur du coffre. De plus, cette position facilite le pliage de l'élément formant cache bagage lorsque celui-ci est, par exemple, formé de lattes telles que précitées.

Le véhicule peut comporter un rebord d'appui qui s'étend horizontalement sous ledit bord inférieur de ladite ouverture d'accès et qui est apte à servir d'appui à un bord dudit faux plancher dans ladite position haute dudit faux plancher.

La présente invention concerne également un procédé de mise en position haute d'un faux plancher de coffre de véhicule automobile, ledit faux plancher étant distant du plancher dudit coffre en position haute. Selon le procédé de l'invention :
- on agence dans une configuration de rangement un élément formant cache bagage qui est apte à être monté entre les parois latérales du coffre dans une configuration d'occultation pour occulter le plancher du coffre;
- on retire le faux plancher dudit coffre ; et
- on dispose ledit élément formant cache bagage dans ladite configuration de rangement sur ledit plancher de manière à ce qu'il forme une surface d'appui.
- on dispose ledit faux plancher sur ladite surface d'appui de manière à maintenir ledit faux plancher dans ladite position haute.

Selon un mode particulier de mise en oeuvre, ledit élément formant cache bagage comportant une pluralité de lattes articulées repliables les unes sur les autres, on replie lesdites lattes les unes sur les autres pour obtenir ladite configuration de rangement.

D'autres particularités et avantages de l'invention ressortiront à la lecture de la description faite ci-après d'un mode de réalisation particulier de l'invention, donné à titre indicatif mais non limitatif, en référence aux dessins annexés sur lesquels :
- la Figure 1 représente une vue en perspective d'une coupe longitudinale du coffre d'un mode de réalisation de l'invention, le faux plancher étant en position basse et l'élément formant cache bagage étant en position déployée ;
- la Figure 2 représente une vue en perspective d'une coupe longitudinale du mode de réalisation de la Figure 1, l'élément formant cache bagage étant dans une position intermédiaire ; et
- la Figure 3 représente une vue en perspective d'une coupe longitudinale du mode de réalisation de la Figure 1, le faux plancher étant en position haute et l'élément formant cache bagage étant dans sa configuration de rangement ;

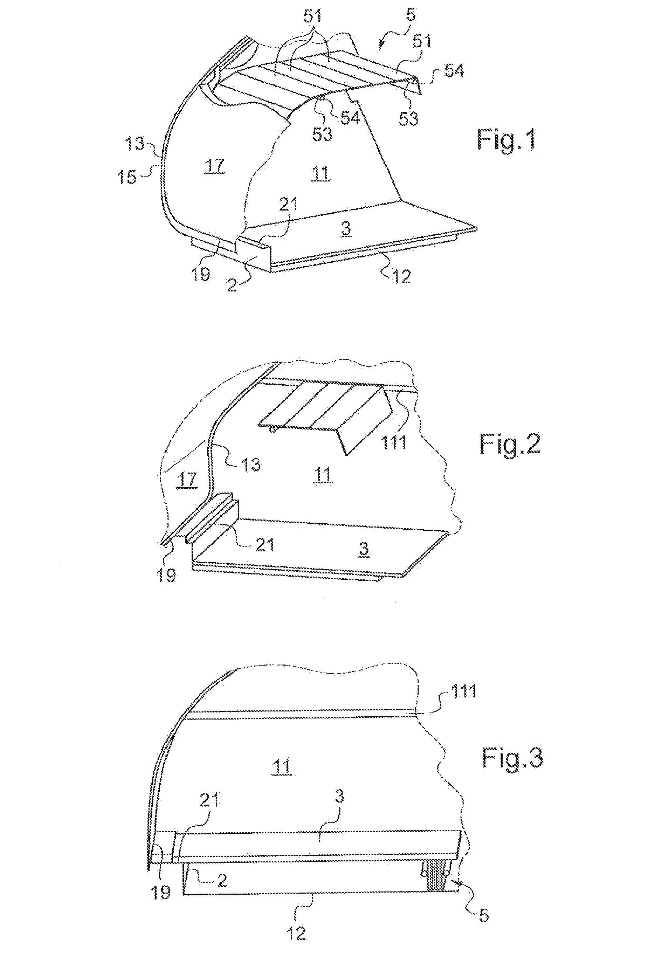

Comme représenté sur la Figure 1, le coffre du véhicule est délimité par deux parois latérales 11 verticales, un plancher horizontal 12 et une paroi arrière 15 qui est perpendiculaire au plancher et aux parois latérales 11. Une ouverture d'accès 13 est ménagée dans la paroi arrière 15. Cette ouverture d'accès 13 est fermée par un hayon mobile 17. L'ouverture 13 présente un bord inférieur 19, parallèle au plancher 12 et s'étendant transversalement au véhicule. La jupe 2 qui est la partie de la paroi arrière qui relie le plancher au bord inférieur 19 de l'ouverture d'accès 13 forme, sensiblement en dessous du bord inférieur 19 un rebord d'appui 21, sensiblement horizontal, qui s'étend vers l'intérieur du coffre.

Le coffre comporte également un faux plancher 3 qui est une plaque rigide et un cache bagage 5 qui est, sur la Figure 1, monté entre les parois latérales 11 du coffre, à distance du plancher 12 et du faux plancher 3 qui recouvre ce dernier. Le cache bagage 5 permet, dans sa configuration et sa position représentées sur la Figure 1, de cacher à la vue, l'intérieur du coffre. Le cache bagage 5 comporte une pluralité de lattes 51 reliées les unes aux autres et articulées de manière à pouvoir être repliées les unes sur les autres. Au moins deux lattes 51, distantes l'une de l'autre, comportent des moyens de montage 53 qui sont, dans le mode de réalisation ici représenté, des tiges dont les extrémités 54 dépassent de part et d'autre de la latte 51, selon la dimension longitudinale de cette dernière. Sur la Figure 1, les extrémités 54 des tiges viennent en appui sur un rebord horizontal 111, ménagé dans chacune des parois latérales 11. Ce rebord 111 s'étend longitudinalement au coffre, au dessus du passage de roue de chaque paroi latérale 11, sensiblement en dessous de la fenêtre ménagée dans la paroi latérale 11, au niveau du coffre.

Dans la configuration représentée sur la Figure 1, le cache bagage 5 est déplié dans sa position d'occultation, toutes les lattes 51 sont disposées les unes à côtés des autres de manière à former une surface continue. Le cache bagage 5 est monté entre les parois latérales 11 à distance du plancher 12 et du faux plancher 3. Il occulte ainsi l'intérieur du coffre. Le faux plancher 3 est en position basse, c'est-à-dire disposé sur le plancher 12, toute sa face inférieure venant au contact du plancher 12.

Sur la Figure 2, le faux plancher 3 est toujours en position basse, c'est-à-dire contre le plancher 12. Le cache bagage 5 est partiellement replié ; il est en position intermédiaire. Une tige 53 permet, de par l'appui de ses extrémités 54, le maintien du cache bagage 5 entre les parois latérales 11.

Sur la Figure 3, le cache bagage 5 est totalement replié. Il forme un bloc qui correspond à la taille d'une latte 51 et dont l'épaisseur correspond à la somme des épaisseurs des lattes 51 qui le constituent. Il est disposé, dans sa configuration repliée de rangement, sur le plancher 12, transversalement au coffre, de manière à ce que sa tranche, c'est-à-dire son épaisseur prennent appui sur le plancher 12. La hauteur du cache bagage, mesurée verticalement dans le coffre, dans sa configuration de rangement correspond donc à la largeur d'une latte 51.

Le faux plancher 3 est, sur la Figure 3 dans sa position haute, ou position break. Un bord du faux plancher 3 est en appui sur le rebord d'appui 21 tandis que le bord opposé, selon la dimension longitudinale du coffre, est en appui sur la tranche du cache bagage 5, en configuration de rangement. Le cache bagage en configuration de rangement sert d'appui et de maintien au faux plancher 3, au-dessus du plancher 12. Le faux plancher 3 prolonge ainsi le bord inférieur 19 de l'ouverture d'accès au coffre, vers les sièges arrière du véhicule. Dans cette configuration, le cache bagage n'est d'aucune utilité et doit être souvent rangé. La configuration de rangement permet de ranger le cache-bagage tout en soutenant le faux plancher sans ajout de béquille ou autre à ce dernier.

## Revendications

1. Véhicule automobile qui comporte un coffre délimité par un plancher horizontal (12), deux parois latérales (11) et une paroi arrière (15) qui sont sensiblement verticales, ladite paroi arrière (15) comportant une ouverture d'accès (13) dont le bord inférieur (19) est à un niveau plus élevé que ledit plancher (12), ledit véhicule comportant en outre, un faux plancher (3), amovible qui est apte à être monté dans une position basse dans laquelle ledit faux plancher (3) est contre ledit plancher (12) et une position haute dans laquelle ledit faux plancher (3) est parallèle au plancher, sensiblement en prolongement dudit bord inférieur (19), ledit véhicule comportant également un élément formant cache bagage (5) qui est amovible et apte à être monté entre lesdites parois latérales (11), à distance dudit faux plancher (3) dans une configuration d'occultation dans laquelle il masque ledit faux plancher (3), **caractérisé en ce que** ledit élément formant cache bagage (5) est apte à être agencé dans une configuration de rangement propre à servir de soutien audit faux plancher (3) dans ladite position haute, lorsque ledit élément formant cache bagage (3) est disposé dans ladite configuration de rangement entre ledit plancher (12) et ledit faux plancher (3).

2. Véhicule selon la revendication 1, **caractérisé en ce que** ledit élément formant cache bagage (5) comporte une pluralité de lattes (51) rigides aptes à être repliées les unes sur les autres pour obtenir ladite configuration de rangement.

3. Véhicule automobile selon la revendication 1 ou 2, **caractérisé en ce que** ledit élément formant cache bagage (5) comporte des moyens de montage (53, 54) apte à coopérer avec lesdites parois latérales (11) pour le montage dudit élément formant cache bagage (5) dans ladite position d'occultation.

4. Véhicule automobile selon la revendication 3, **caractérisé en ce que** lesdits moyens de montage (53, 54) sont disposés de manière à pouvoir monter ledit élément formant cache bagage (5) entre lesdites parois latérales (11) dans une position intermédiaire dans laquelle il occulte partiellement ledit faux plancher (3).

5. Véhicule selon l'une quelconque des revendications précédentes, **caractérisé en ce qu'**il comporte un rebord d'appui (21) qui s'étend horizontalement sous ledit bord inférieur (19) de ladite ouverture d'accès (13) et qui est apte à servir d'appui à un bord dudit faux plancher (3) dans ladite position haute dudit faux plancher (3).

6. Procédé de mise en position haute d'un faux plancher (3) de coffre de véhicule automobile, ledit faux plancher (3) étant distant du plancher (12) dudit coffre en position haute, ledit procédé est **caractérisé en ce que** :
- on agence dans une configuration de rangement un élément formant cache bagage (5) qui est apte à être monté entre les parois latérales du coffre dans une configuration d'occultation pour occulter le plancher (12) du coffre;
- on retire le faux plancher (3) dudit coffre ;
- on dispose ledit élément formant cache bagage (5) dans ladite configuration de rangement sur ledit plancher (12) de manière à ce qu'il forme une surface d'appui ;
- on dispose ledit faux plancher (3) sur ladite surface d'appui de manière à maintenir ledit faux plancher (3) dans ladite position haute.

7. Procédé selon la revendication 6, **caractérisé en ce que** ledit élément formant cache bagage (5) comportant une pluralité de lattes (51) articulées repliables les unes sur les autres, on replie lesdites lattes (51) les unes sur les autres pour obtenir ladite configuration de rangement.
